# EUROPÄISCHE PATENTSCHRIFT

(11) **EP 1 910 694 B1**
(45) Veröffentlichungstag und Bekanntmachung des Hinweises auf die Patenterteilung: **20.07.2011**
(21) Anmeldenummer: 06775735.1
(22) Anmeldetag: 25.07.2006
(51) Int. Cl.: F16D 13/72, F16D 25/12

(54) **DREHMOMENTÜBERTRAGUNGSEINRICHTUNG**
TORQUE TRANSMISSION DEVICE
DISPOSITIF DE TRANSFERT DE COUPLE

(30) Priorität: 27.07.2005 DE 102005035068
(43) Veröffentlichungstag der Anmeldung: 16.04.2008
(73) Patentinhaber: Schaeffler Technologies GmbH & Co. KG, 91074 Herzogenaurach (DE)
(72) Erfinder: ARNOLD, Johannes, 77855 Achern (DE); AGNER, Ivo, 77815 Bühl (DE); REIK, Wolfgang, 77815 Bühl (DE)
(86) Internationale Anmeldenummer: PCT/DE2006/001279
(87) Internationale Veröffentlichungsnummer: WO 2007/012312

(56) Entgegenhaltungen:
- DE-A1- 3 331 131
- GB-A- 2 387 206
- JP-A- 9 089 005
- US-A- 4 023 661
- US-A- 5 931 218
- US-B1- 6 217 758

## Beschreibung

Die Erfindung betrifft eine Drehmomentübertragungseinrichtung für einen Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und mit einem Getriebe mit mindestens einer Getriebeeingangswelle, mit mindestens einer nasslaufenden Kupplungseinrichtung, die mehrere Kupplungselemente, insbesondere Lamellen, aufweist, die zumindest teilweise von einem zu kühlenden Medium umgeben sind, das in einem Kühler abgekühlt wird, wobei der Kühler eine Kühlerwandung aufweist, die radial außerhalb der Kupplungselemente so angeordnet ist, dass das zu Kühlende Medium in Betrieb der Drehmomentübertragungseinrichtung mit der Kühlerwandung in Kontakt kommt.

Das zu kühlende Medium dient hauptsächlich dazu, die im Betrieb der Kupplungseinrichtung durch Reibung entstehende Wärme an den Kupplungselementen abzuführen. Hierzu wird die Kupplung zum Beispiel mit Öl gekühlt. Das Öl muss in die Kupplungseinrichtung eingebracht und nach dem Kühlvorgang wieder aus der Kupplung herausgefördert werden, um selbst wiederum in einem Kühler abgekühlt zu werden, damit es dem Kühlkreislauf wieder zugeführt werden kann.

Aufgabe der Erfindung ist es, eine Drehmomentübertragungseinrichtung gemäß dem Oberbegriff des Anspruchs 1 zu schaffen, die einen hohen Wirkungsgrad aufweist und kostengünstig herstellbar ist.

Die Aufgabe ist bei einer Drehmomentübertragungseinrichtung für einen Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und mit einem Getriebe mit mindestens einer Getriebeeingangswelle, mit mindestens einer nasslaufenden Kupplungseinrichtung, die mehrere Kupplungselemente, insbesondere Lamellen, aufweist, die zumindest teilweise von einem zu kühlenden Medium umgeben sind, das in einem Kühler abgekühlt wird, wobei der Kühler eine Kühlerwandung aufweist, die radial außerhalb der Kupplungselemente so angeordnet ist, dass das zu kühlende Medium im Betrieb der Drehmomentübertragungseinrichtung mit der Kühlerwandung in Kontakt kommt, dadurch gelöst, dass der Kühler in einem Ringraum radial außerhalb der Kupplungselemente angeordnet ist und im Wesentlichen die Gestalt eines Rings aufweist. Im Betrieb drehen sich die Kupplungselemente. Das zu kühlende Medium strömt an den Kupplungselementen vorbei und trifft mit einer radialen Geschwindigkeitskomponente, die durch die Zentrifugalkraft bewirkt wird, und gegebenenfalls einer Geschwindigkeitskomponente in Umfangsrichtung auf die Kühlerwandung. Aufgrund der großen Umfangsgeschwindigkeit der Lamellen und einem kleinen Abstand zur Kühlerwandung entsteht an der Kühlerwandung eine Schleppströmung mit einem hohen Turbulenzgrad, der zu einer verbesserten Wärmeübertragung führt.

Erfindungsgemäß ist der Kühler in einem Ringraum radial außerhalb der Kupplungselemente angeordnet. Das liefert den Vorteil, dass das die Kupplungselemente verlassende zu kühlende Medium direkt auf die Kühlerwandung trifft.

Erfindungsgemäß ist der Kühler im Wesentlichen die Gestalt eines Rings aufweist. Vorzugsweise wird der Kühler von einem Kühlmedium durchströmt, das die Wärme aus dem zu kühlenden Medium abführt. Die Strömungsrichtung des Kühlmediums ist vorzugsweise der Drehrichtung der Kupplungselemente entgegengesetzt, um die Kühlleistung zu erhöhen.

Ein weiteres bevorzugtes Ausführungsbeispiel der Drehmomentübertragungseinrichtung ist dadurch gekennzeichnet, dass der Kühler im Wesentlichen die Gestalt eines ringförmigen Rohres aufweist. Vorzugsweise ist der Kühler an einem Ende mit einem Zufluss und an seinem anderen Ende mit einem Abfluss für das Kühlmedium ausgestattet.

Ein weiteres bevorzugtes Ausführungsbeispiel der Drehmomentübertragungseinrichtung ist dadurch gekennzeichnet, dass der Kühler in einen Kupplungsdeckel der Kupplungseinrichtung integriert ist. Vorzugsweise weist der Kupplungsdeckel im Bereich des Kühlers einen U-förmigen Querschnitt auf.

Ein weiteres bevorzugtes Ausführungsbeispiel der Drehmomentübertragungseinrichtung ist dadurch gekennzeichnet, dass der Kühler in eine Kupplungsglocke der Kupplungseinrichtung integriert ist. Vorzugsweise handelt es sich bei der Kupplungsglocke um ein Gussteil, in das ein ringförmiger Hohlraum für den oder als Kühler eingegossen ist.

Ein weiteres bevorzugtes Ausführungsbeispiel der Drehmomentübertragungseinrichtung ist dadurch gekennzeichnet, dass die Kupplungselemente Lamellen umfassen, die an einem Lamellenträger angebracht sind, der Durchgangslöcher aufweist, die einen Durchtritt des zu kühlenden Mediums in radialer Richtung ermöglichen. Durch die Durchgangslöcher gelangt das zu kühlende Medium von den Lamellen direkt zum Kühler.

Ein weiteres bevorzugtes Ausführungsbeispiel der Drehmomentübertragungseinrichtung ist dadurch gekennzeichnet, dass die Belaglamellen Nuten für das zu kühlende Medium aufweisen.

Ein weiteres bevorzugtes Ausführungsbeispiel der Drehmomentübertragungseinrichtung ist dadurch gekennzeichnet, dass der Kühler zur Getriebeseite geführte Kühlmediumsanschlüsse aufweist. Der Einbau des Kühlers erfolgt bei diesem Ausführungsbeispiel vorzugsweise von der Antriebsseite her.

Ein weiteres bevorzugtes Ausführungsbeispiel der Drehmomentübertragungseinrichtung ist dadurch gekennzeichnet, dass der Kühler in radialer Richtung verlaufende Kühlmediumsanschlüsse aufweist. Bei diesem Ausführungsbeispiel verlaufen die Kühlmediumsanschlüsse vorzugsweise durch die Kupplungsglocke hindurch.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erfindungsgemäße Drehmomentübertragungseinrichtung gemäß einem ersten Ausführungsbeispiel im Halbschnitt;
- Figur 2: eine vereinfachte, schematische Darstellung einer erfindungsgemäßen Drehmomentübertragungseinrichtung im Halbschnitt;
- Figur 3: die Ansicht eines Schnitts entlang der Linie III-III in Figur 2;
- Figur 4: eine vergrößerte Darstellung eines Ausschnitts einer erfindungsgemäßen Dreh- momentübertragungseinrichtung im Querschnitt;
- Figur 5: einen vergrößerten Ausschnitt aus Figur 4;
- Figur 6: eine Drehmomentübertragungseinrichtung gemäß einem weiteren Ausführungs- beispiel im Querschnitt;
- Figur 7: einen vergrößerten Ausschnitt aus Figur 6 gemäß einem weiteren Ausführungs- beispiel;
- Figur 8: einen vergrößerten Ausschnitt aus Figur 6 gemäß einem weiteren Ausführungs- beispiel;
- Figur 9: einen Kühler einer erfindungsgemäßen Drehmomentübertragungseinrichtung gemäß einem weiteren Ausführungsbeispiel im Querschnitt;
- Figur 10: einen Kühler einer erfindungsgemäßen Drehmomentübertragungseinrichtung gemäß einem weiteren Ausführungsbeispiel im Querschnitt;
- Figur 11 1: eine vereinfachte Darstellung einer erfindungsgemäßen Drehmomentübertra- gungseinrichtung gemäß einem weiteren Ausführungsbeispiel im Halbschnitt;
- Figur 12: eine vereinfachte Darstellung einer erfindungsgemäßen Drehmomentübertra- gungseinrichtung gemäß einem weiteren Ausführungsbeispiel im Halbschnitt;
- Figur 13: eine vereinfachte Darstellung einer erfindungsgemäßen Drehmomentübertra- gungseinrichtung gemäß einem weiteren Ausführungsbeispiel im Halbschnitt;
- Figur 14: eine Drehmomentübertragungseinrichtung gemäß einem weiteren Ausführungs- beispiel im Querschnitt;
- Figur 15: einen Querschnitt durch einen ringförmigen Kühler mit quadratischen Innenkam- mern;
- Figur 16: einen Querschnitt durch einen ringförmigen Kühler mit rechteckigen Innenkam- mern;
- Figur 17: einen Querschnitt gemäß Figur 15 oder 16 mit Innenrippen;
- Figur 18: einen Querschnitt mit radialen Innenrippen;
- Figur 19: einen Querschnitt mit dreieckigen Innenrippen,
- Figur 20: einen Querschnitt mit kupplungsseitigen runden Rippen;
- Figur 21: einen Querschnitt mit kupplungsseitigen dreieckigen Rippen;
- Figur 22: einen Querschnitt mit kupplungsseitigen rechteckigen Rippen;
- Figur 23: einen Querschnitt mit kupplungsseitigen und kühlmediumseitigen dreieckigen Rippen;
- Figur 24: einen Querschnitt mit wellenförmigen Profil;
- Figur 25: einen Querschnitt durch ein Endstück des ringförmigen Kühlers gemäß der Schnittlinie B-B aus Figur 26;
- Figur 26: einen Querschnitt gemäß der Schnittlinie A - A aus Figur 25.

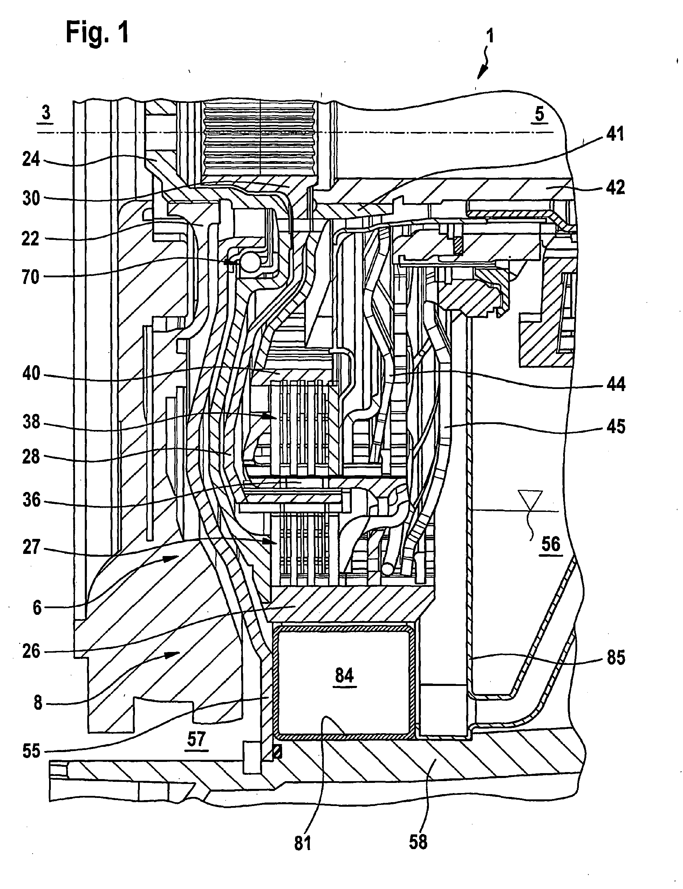

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle ausgeht, und einem Getriebe 5 ist eine nasslaufende Doppelkupplung 6 in Lamellenbauweise angeordnet. Zwischen die Antriebseinheit 3 und die Doppelkupplung 6 ist eine Schwingungsdämpfungseinrichtung 8 geschaltet, die in Figur 1 nur angedeutet ist. Bei der Schwingungsdämpfungseinrichtung 8 handelt es sich vorzugsweise um ein Zweimassenschwungrad.

Die Kurbelwelle der Brennkraftmaschine 3 ist zum Beispiel über Schraubverbindungen fest mit einem Eingangsteil der Schwingungsdämpfungseinrichtung 8 verbunden. Das Eingangsteil der Schwingungsdämpfungseinrichtung 8 ist über Energiespeicherelemente in bekannter Art und Weise mit einem Ausgangsteil der Schwingungsdämpfungseinrichtung gekoppelt. Das Ausgangsteil der Schwingungsdämpfungseinrichtung 8 ist über ein Nabenteil 22 drehfest mit einem Eingangsteil 24 der Doppelkupplung 6 verbunden. Das Kupplungsteil 24 ist einstückig mit einem Außenlamellenträger 26 einer ersten Lamellen-Kupplungsanordnung 27 verbunden. Radial innerhalb des Außenlamellenträgers 26 ist ein Innenlamellenträger 28 der ersten Lamellen-Kupplungsanordnung 27 angeordnet. Der Innenlamellenträger 28 ist radial innen an einem Nabenteil 30 befestigt, das über eine Verzahnung drehfest mit einer ersten Getriebe-eingangswelle verbunden ist.

Das Kupplungseingangsteil 24 beziehungsweise der Außenlamellenträger 26 der ersten Lamellen-Kupplungsanordnung 27 ist über ein Kopplungsteil drehfest mit einem Außenlamellenträger 36 einer zweiten Lamellen-Kupplungsanordnung 38 verbunden. Radial innerhalb des Außenlamellenträgers 36 ist ein Innenlamellenträger 40 der zweiten Lamellen-Kupplungsanordnung 38 angeordnet, der radial innen mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle drehbar angeordnet.

Die beiden Lamellen-Kupplungsanordnungen 27 und 38 werden über Betätigungshebel 45 und 44 betätigt, deren radial innere Enden sich an Betätigungslagern abstützen. Zwischen der Schwingungsdämpfungseinrichtung 8 und dem Außenlamellenträger 26 der ersten Lamellen-Kupplungsanordnung 27 ist ein Kupplungsdeckel 55 angeordnet, der radial außen an einem Getriebegehäuseabschnitt 58 befestigt ist. Der Kupplungsdeckel 55 trennt einen Nassraum 56, in dem die beiden Lamellen-Kupplungsanordnungen 27 und 38 angeordnet sind, von einem trockenen Aufnahmeraum 57, in dem die Schwingungsdämpfungseinrichtung 8 angeordnet ist. Radial innen ist zwischen dem Kupplungsdeckel 55 und dem Kupplungseingangsteil 24 eine Lagereinrichtung 70 angeordnet.

Im Betrieb der Doppelkupplung 6 entsteht durch Reibung an den Lamellen Wärme. Zum Abführen der Wärme wird der Kupplung 6 Kühlöl zugeführt, das in einem Kühlkreislauf gekühlt wird. Die der Kupplung zugeführte Kühlölmenge muss je nach Fahrzustand des Fahrzeugs geregelt werden. Während der Fahrt wird ein Mindestkühlölvolumenstrom benötigt, um die durch die Schlupfregelung der Kupplung auftretende Wärme abzuführen. Beim Kupplungsvorgang muss ein großer Volumenstrom zur Verfügung gestellt werden, da hier eine verhältnismäßig große Wärmemenge anfällt. Beim Synchronisieren muss der Kühlölvolumenstrom gegen Null zurückgefahren werden, um ein Restschleppmoment an den Kupplungslamellen zu vermeiden. Der größte Volumenstrom wird bei Drehzahlen benötigt, die ein Abwürgen des Motors bewirken könnten. Bei einem Stall dreht der Antrieb und der Abtrieb steht. Es wird die gesamte Motorleistung in Form von Wärme über die Kupplung abgeführt.

Radial außerhalb des Außenlamellenträgers 26 der ersten Lamellen-Kupplungsanordnung 27 ist eine Ringraum 81 vorgesehen, der zur Aufnahme eines Kühlers 84 dient. Der Ringraum 81 wird radial außen von dem Getriebegehäuseabschnitt 58 begrenzt. In axialer Richtung wird der Ringraum 81 von dem Kupplungsdeckel 55 zur Antriebsseite hin begrenzt. Zur Getriebe-seite hin wird der Ringraum 81 von einem Nassraumblech 85 begrenzt..

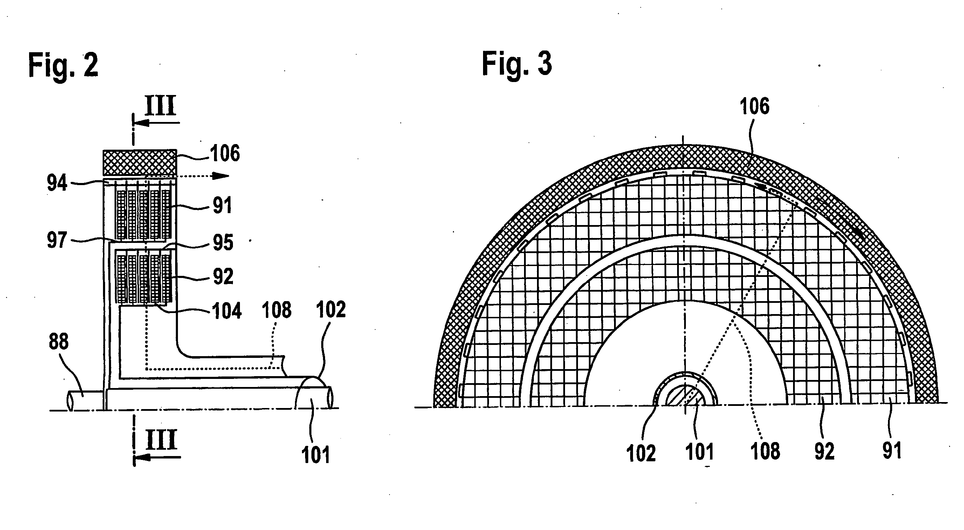

In den Figuren 2 und 3 ist das Grundprinzip einer Drehmomentübertragungseinrichtung mit einem erfindungsgemäßen Kühlölsystem vereinfacht schematisch in verschiedenen Ansichten dargestellt. Eine Kurbelwelle 88 einer Brennkraftmaschine ist über eine erste Lamellenkupplung 91 oder eine zweite Lamellenkupplung 92 mit einer ersten Getriebeeingangswelle 101 oder einer zweiten Getriebeeingangswelle 102 koppelbar. Die Lamellen-Kupplungsanordnungen 91, 92 umfassen äußere Lamellenträger 94, 95 und innere Lamellenträger 97, 104. Radial außerhalb der Lamellenkupplungen 91, 92 ist ein Ringkühler 106 angeordnet. Durch einen gepunkteten Pfeil 108 ist der Strömungsweg des Kühlöls angedeutet.

Das Kühlöl wird gekühlt, indem es direkt nach dem Verlassen von Kühlölkanälen in den Reiblamellen der Kupplungen 91, 92 auf die radial innere Kühlerwandung des Ringkühlers 106 auftrifft und an dieser entlang geführt wird. Die zum Kühlen notwendige Oberfläche ist gemäß einem Aspekt der vorliegenden Erfindung radial um die äußere Kupplung 91 herum angeordnet. Das durch den in den Kupplungen auftretenden Schlupf erhitzte Kühlöl tritt nach dem Verlassen des äußeren Lamellenträgers 94 direkt auf die Oberfläche des Ringkühlers 106.

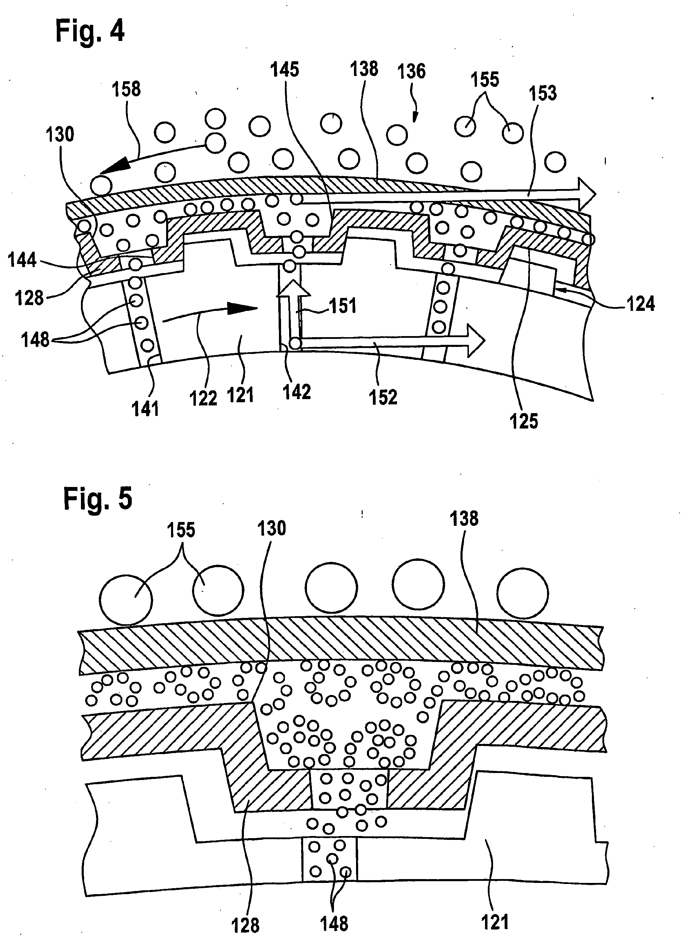

In Figur 4 ist ein Teil einer Kupplungsbelaglamelle 121 in der Draufsicht dargestellt. Durch einen Pfeil 122 ist angedeutet, dass sich die Kupplungsbelaglamelle 121 im Betrieb im Uhrzeigersinn dreht. Die Kupplungsbelaglamelle 121 weist radial außen eine Außenverzahnung 124 auf, die sich mit einer Innenverzahnung 125 in Eingriff befindet, die radial innen an einem Lamellenträger 128 vorgesehen ist. Radial außen weist der Lamellenträger 128 eine Außenverzahnung 130 auf. In einem radialen Abstand zu dem Lamellenträger 128 ist ein Kühler 136 mit einer Kühlerwandung 138 angeordnet. Der Kühler 136 ist ringförmig ausgebildet.

Die Kupplungsbelaglamelle 121 weist Kühlölnuten 141, 142 auf. Radial außen münden die Kühlölnuten 141, 142 in der Nähe von Durchgangslöchern 144, 145, die in dem Lamellenträger 128 vorgesehen sind. Das zu kühlende Medium ist durch kleinere schwarze, kreisflächenförmige Punkte 148 angedeutet. Durch einen Pfeil 151 ist angedeutet, dass das zu kühlende Medium eine radiale Geschwindigkeitskomponente aufweist. Durch einen Pfeil 152 ist angedeutet, dass das zu kühlende Medium ebenfalls eine Geschwindigkeitskomponente in Umfangsrichtung aufweist. In dem Kühler 136 ist ein Kühlmedium, vorzugsweise Wasser, aufgenommen, das durch größere, kreisflächenförmige Punkte 155 angedeutet ist. Durch einen Pfeil 158 ist angedeutet, dass das Kühlmedium 155 gegen den Uhrzeigersinn durch den Ringkühler 136 befördert wird.

Aufgrund der Rotation des Lamellenträgers 128 und der Kupplungsbelaglamelle 121 besitzt das Kühlöl beim Verlassen der Kupplung sowohl die durch die Zentrifugalkraft erzeugte radiale Geschwindigkeitskomponente 151 als auch die Geschwindigkeitskomponente 152 in Umfangsrichtung, die durch die Schleppwirkung der Kühlölnuten 141, 142 erzeugt wird. Die Außenverzahnung 130 des äußeren Lamellenträgers 128 wirkt wie ein Umfördermechanismus und hält somit die Geschwindigkeitskomponente 153 des Öls in Umfangsrichtung nahezu aufrecht. Durch den Schleppeffekt wird die Verweilzeit des heißen Öls an der Oberfläche der Kühlerwandung 138 vergrößert, wodurch die Abgabe einer entsprechend großen Wärmemenge an den Kühler 136 ermöglicht wird.

In Figur 5 ist angedeutet, dass durch die relativ große Umfangsgeschwindigkeit des Lamellenträgers 128 im Betrieb der Kupplung und den relativ kleinen Abstand zwischen der Kühlerwand 138 und der Außenverzahnung 130 des Lamellenträgers 128 eine Ölschleppströmung mit einem hohen Turbulenzgrad entsteht. Je größer die Turbulenz der Strömung ist, desto besser ist die Wärmeübertragung vom Kühlöl zum Kühler. Durch die starke Verwirbelung der Ölmoleküle, die sich nicht nur in Umfangsrichtung, sondern auch quer zur Strömungsrichtung bewegen, wird erreicht, dass jedes Ölmolekühl mindestens einmal die Oberfläche des Kühlers erreicht und die gespeicherte Wärme abgeben kann.

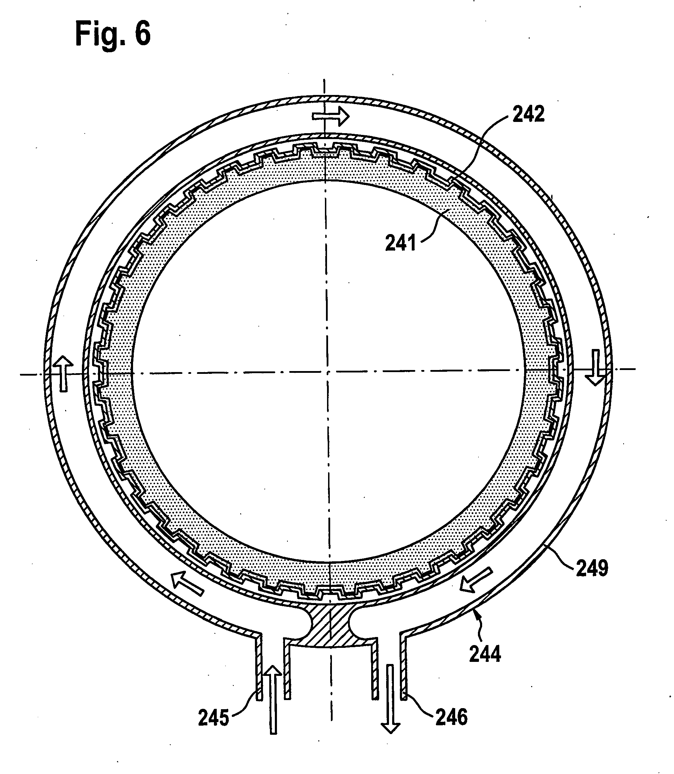

In Figur 6 ist eine Stahllamelle 241 dargestellt, die sich mit einem äußeren Lamellenträger 242 in Eingriff befindet. Radial außerhalb des äußeren Lamellenträgers 242 ist ein Ölkühler 244 angeordnet. Der Kühler 244 weist einen Zufluss 245 und einen Abfluss 246 für das Kühlmedium auf. Durch Pfeile ist das durch den Kühler 244 strömende Kühlmedium angedeutet.

Der Kühler 244 ist ringförmig ausgeführt und so angeordnet, dass das den äußeren Lamellenträger 242 verlassende Kühlöl direkt auf die Oberfläche einer Kühlerwandung 249 auftrifft. Die Strömungsrichtung des Kühlmediums ist immer entgegengesetzt zur Drehrichtung des Motors und somit der Kupplung. Daraus resultieren wegen der geringen mittleren Temperaturdifferenz zwischen den Fluiden kleine Energieverluste. Das erfindungsgemäße Prinzip ähnelt dem eines Gegenstromwärmetauschers. Der Unterschied besteht jedoch darin, dass dem Kühler über den gesamten Umfang heißes Kühlöl aus der Kupplung zugeführt wird, das heißt die Ölzuflusstemperatur ist nahezu konstant. Die Kühlmediumtemperatur im Kühler nimmt jedoch vom Zufluss 245 zum Abfluss 246 hin zu.

Der Abstand zwischen der Außenverzahnung des äußeren Lamellenträgers 242 und der Kühlerwandung 249 des Kühlers 244 wird durch den Durchmesser des Kühlers bestimmt. Der Abstand ist vorzugsweise so ausgelegt, dass die Kühlleistung aufgrund der großen Turbulenz des Kühlöls und somit eines großen Wärmeübergangskoeffizienten möglichst groß wird und das Schleppmoment aufgrund der Newton'schen Scherspannung des Kühlöls möglichst gering wird. Die Auswirkung des Abstands auf Kühlleistung und Wärmeübergangskoeffizient ist gegenläufig, das heißt bei einem großen Abstand ist das Schleppmoment gering und die Kühlleistung klein. Bei einem möglichst geringen Abstand verhalten sich Kühlleistung und Schleppmoment genau gegenläufig.

Um den Wärmeübergang zu erhöhen, kann die wärmeübertragende Fläche zwischen der Kühlerwandung 249 und dem Kühlmedium vergrößert werden. Dafür können verschiedene Möglichkeiten in Betracht gezogen werden.

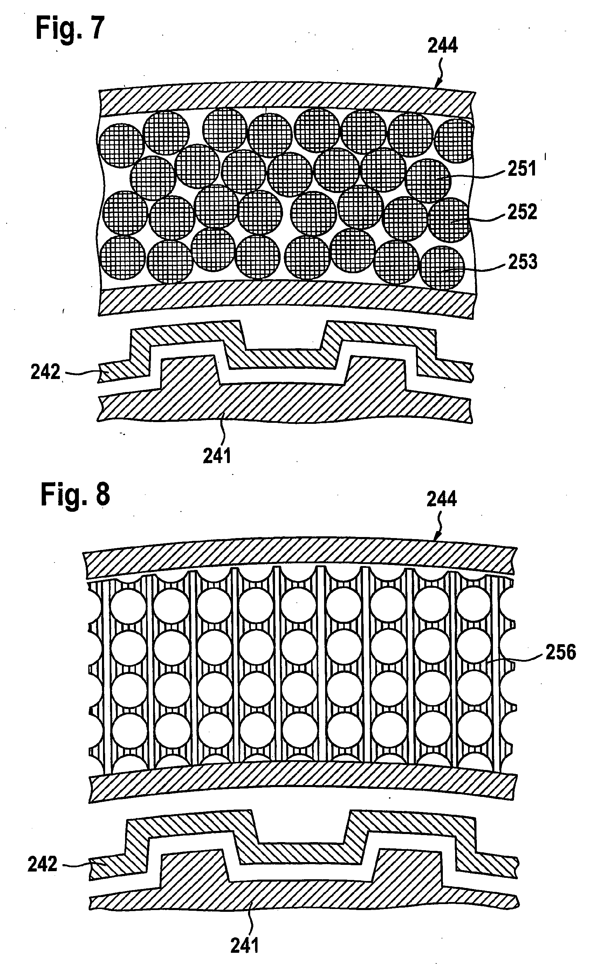

In Figur 7 ist angedeutet, dass der Kühler 244 mit einer Vielzahl von Kugeln 251 bis 253 einer offenporigen Metallschaumstruktur gefüllt sein kann. Die Kugeln 251 bis 253 sind vorzugsweise aus einem dem Material des Kühlergehäuses entsprechenden Material gebildet. Der Kühler kann auch mit einem in Form von Schüttgut vorliegenden Material, zum Beispiel mit Metallspänen, gefüllt sein. Die Füllung ist vorzugsweise so ausgeführt, dass sie in Kontakt mit der Kühlenrwandung steht, die Fläche von Kühlerwand zu Kühlmedium stark vergrößert und den Durchflusswiderstand des Kühlers für das Kühlmedium nur leicht vergrößert.

In Figur 8 ist angedeutet, dass in den Kühler 244 zur Oberflächenvergrößerung auch geriffelte, gelochte oder geriffelte und gelochte ringförmige Turbulenzbleche 256 eingebaut sein können. Die Bleche sind vorzugsweise so angeordnet, dass sie in Kontakt mit der wärmeaufnehmenden Kühlerwand stehen und die Wärme so in die Kühlermitte weiterleiten zu können, um diese dort an das Kühlmedium abgeben zu können. Durch die Lochung und/oder Riffelung der Bleche 256 wird das strömende Kühlmedium in seiner Strömungsrichtung abgelenkt. Die Moleküle des Kühlmediums führen somit verstärkt Querbewegungen zur Hauptströmungsrichtung durch und ermöglichen durch einen vermehrten Kontakt mit den Turbulenzblechen und der Kühlerwandung einen größeren Wärmeübergangskoeffizienten und somit eine größere Kühlleistung. Zusätzlich wird die Kühlleistung durch die vergrößerte Fläche gesteigert.

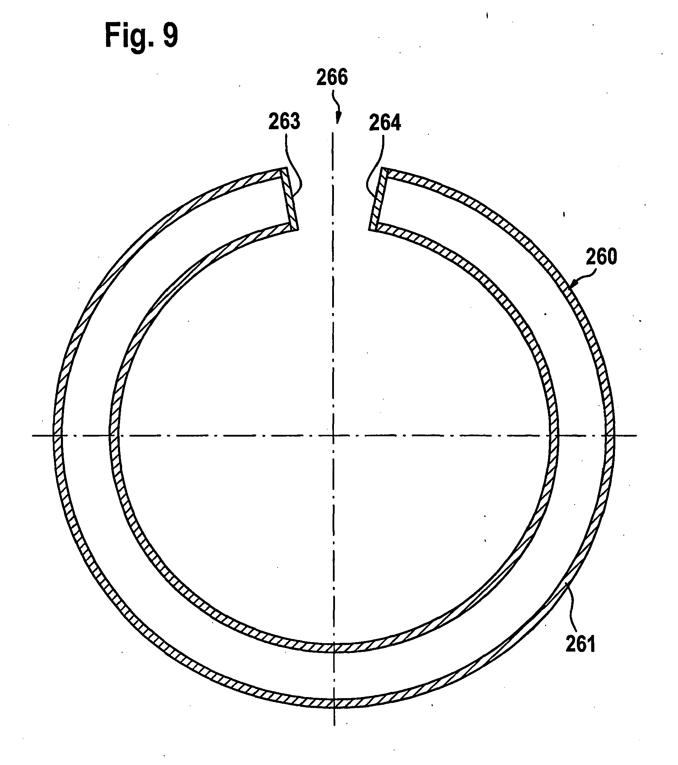

In Figur 9 ist ein Kühler 260 im Querschnitt dargestellt, der ein gebogenes Rohr 261 umfasst. Das Rohr 261 ist an seinen offenen Enden durch Deckel 263, 264 verschlossen, die mit dem Rohr 261 verschweißt sind. Der Kühler 260 hat somit die Gestalt eines mit einer Öffnung 266 versehenen Rings. Um ein Entweichen der Ölschleppströmung im Betrieb zu verhindern, wird die Öffnung 266 mit einem (nicht dargestellten) Überbrückungsblech verschlossen.

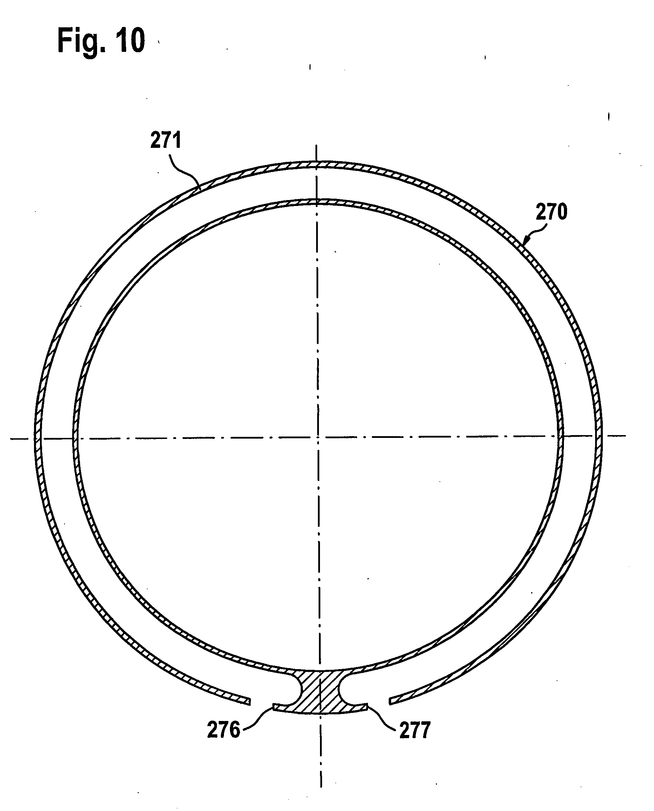

In Figur 10 ist ein Kühler 270 im Querschnitt dargestellt, der durch Fräsen aus einem Vollmaterialring 271 hergestellt ist. Der das Kühlmedium aufnehmende Hohlraum wird also durch Fräsen hergestellt. Anschließend wird der Kühler 270 mit einem geeigneten Deckel verschlossen. Radial außen weist der Kühler 270 einen Einlass 276 und einen Auslass 277 für das Kühlmedium auf.

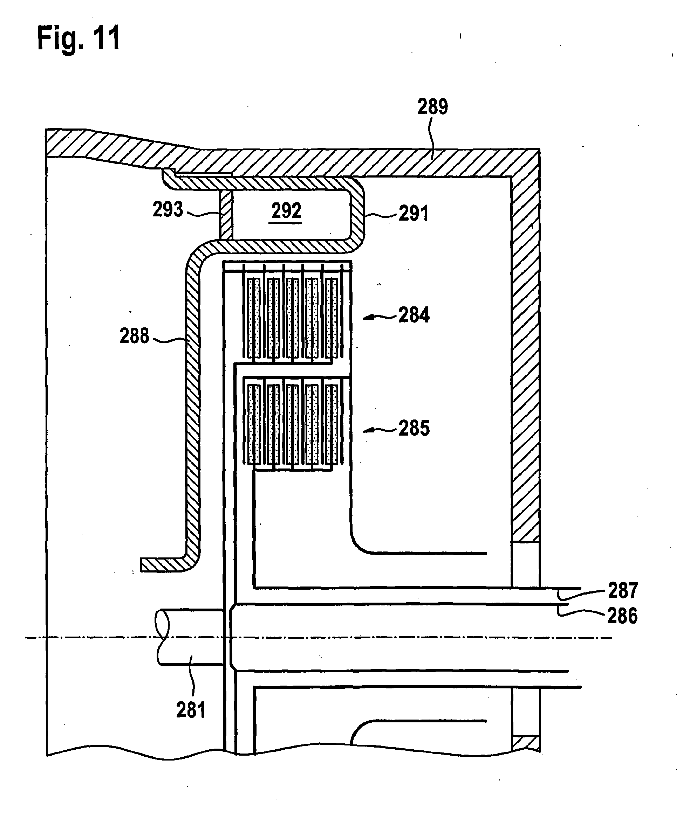

In Figur 11 ist eine Kurbelwelle 281 einer Brennkraftmaschine angedeutet, die über Lamellenkupplungen 284, 285 mit Getriebeeingangswellen 286, 287 koppelbar ist. Ein Kupplungsdeckel 288 stützt sich an einem Getriebegehäuseabschnitt 289 ab, der auch als Kupplungsglocke bezeichnet wird. Der Kupplungsdeckel 288 weist in radialer Richtung zwischen der Lamellenkupplung 284 und der Kupplungsglocke 289 einen U-förmigen Querschnitt 291 auf. Der U-förmige Querschnitt 291 des Kupplungsdeckels 288 begrenzt einen Ringraum 292, der zur Antriebsseite hin durch eine Kreisringscheibe 293 verschlossen ist. Der Kupplungsdeckel 288 dient unter anderem dazu, die Einrückkräfte der Lamellenkupplungen 284, 285 über ein (nicht dargestelltes) Lager abzustützen. Durch den U-förmigen Querschnitt 291 ist es möglich, den Kühler in den Kupplungsdeckel 288 zu integrieren.

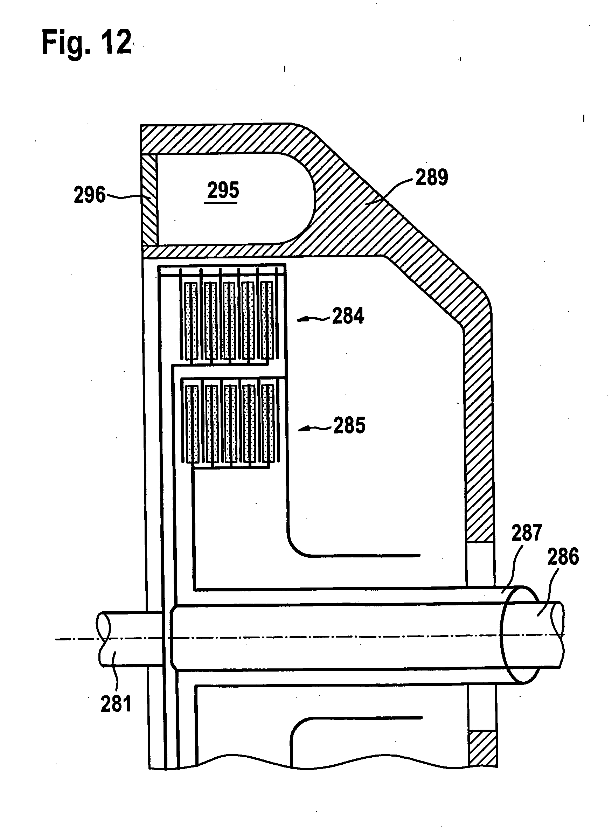

In Figur 12 ist gezeigt, dass die Kupplungsglocke 289 auch als Gussteil ausgeführt sein kann. Dann ist es vorteilhaft, einen ringförmigen Hohlraum 295 in die Kupplungsglocke 289 einzugießen. Der ringförmige Hohlraum 295 kann als Kühler verwendet und durch einen Deckel 296 verschlossen werden. Wenn der Kühler nicht mit zusätzlichen Verwirbelungsblechen gefüllt werden muss, dann besteht auch die Möglichkeit, den Hohlraum 295 geschlossen mit entsprechenden Anschlüssen vollständig einzugießen. Die Kupplungsglocke 289 mit dem Hohlraum 295 kann mit Hilfe einer entsprechenden Dichtung direkt an den Motor angeflanscht sein.

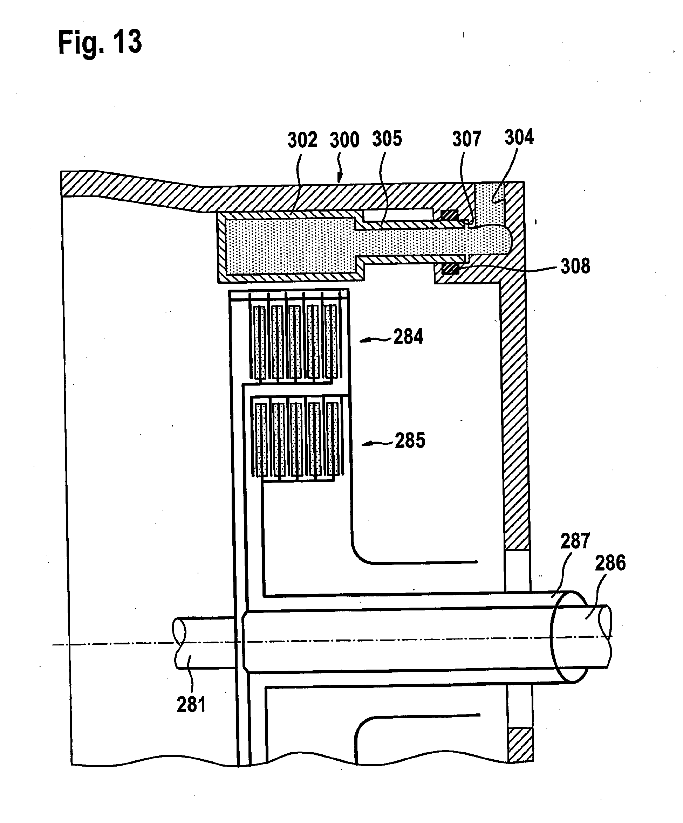

In Figur 13 ist eine Kupplungsglocke 300 gezeigt, an der radial innen ein Kühler 302 anliegt. Der Kühler 302 ist in radialer Richtung zwischen der Lamellenkupplung 284 und der Kupplungsglocke 300 angeordnet. In der Kupplungsglocke 300 ist eine radial verlaufende Wasserzuflussbohrung 304 vorgesehen. Die Wasserzuflussbohrung 304 steht über einen Anschlussstutzen 305 mit dem Innenraum des Kühlers 302 in Verbindung. Der Anschlussstutzen 305 verläuft parallel zu den Getriebeeingangswellen 286, 287. Das freie Ende des Anschlussstutzens 305 ist in einer axialen Bohrung 307 in der Kupplungsglocke 300 aufgenommen und durch einen O-Ring 308 abgedichtet. Beim Einbau wird der Kühler 302 von der Antriebsseite her in die Kupplungsglocke 300 eingeschoben. Dabei werden der Anschlussstutzen 305 und ein weiterer Anschlussstutzen in entsprechende Bohrungen in der Kupplungsglocke eingefädelt. Im Bereich außerhalb der Kupplungsglocke 300 werden (nicht dargestellte) Anschlussleitungen für die Kühlmediumszu- und abfuhr angebracht.

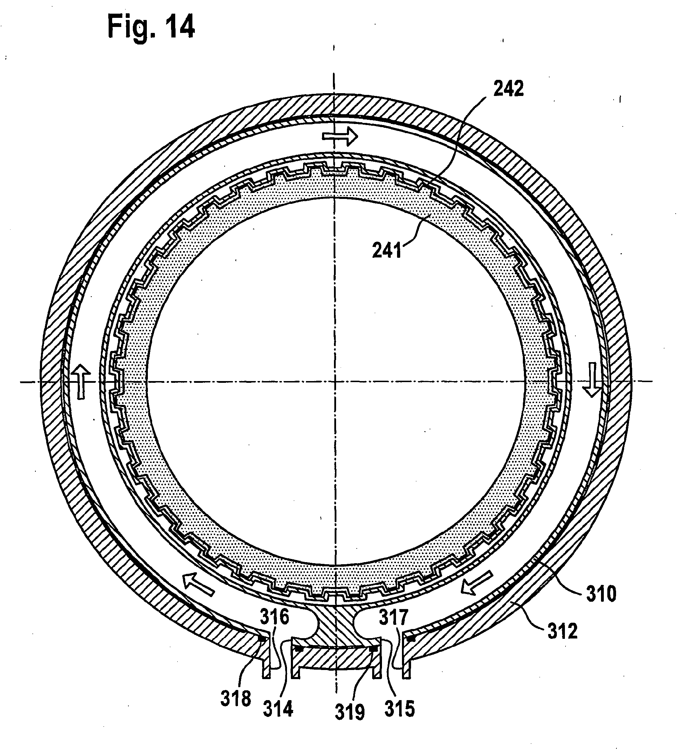

In Figur 14 ist ein Kühler 310 im Querschnitt dargestellt, der in radialer Richtung zwischen einer Kupplungsglocke 312 und einem äußeren Lamellenträger 242 mit einer Stahllamelle 241 angeordnet ist. Der Kühler 310 weist eine Einlassbohrung 314 und eine Auslassbohrung 315 für das Kühlmedium auf. Die Einlassbohrung 314 fluchtet mit einer Einlassbohrung 316, die in der Kupplungsglocke 312 ausgespart ist. Die Auslassbohrung 315 des Kühlers 310 fluchtet mit einer Auslassbohrung 317 in der Kupplungsglocke 312. Die Einlassbohrungen 314, 316 und die Auslassbohrungen 315, 317 verlaufen parallel zueinander in vertikaler Richtung nach unten. Die Kühleranschlüsse sind jeweils über einen O-Ring 318, 319 zur Kupplungsglocke 312 hin abgedichtet. An die Kupplungsglocke 312 werden dann (nicht dargestellte) Anschlussleitungen angeschlossen.

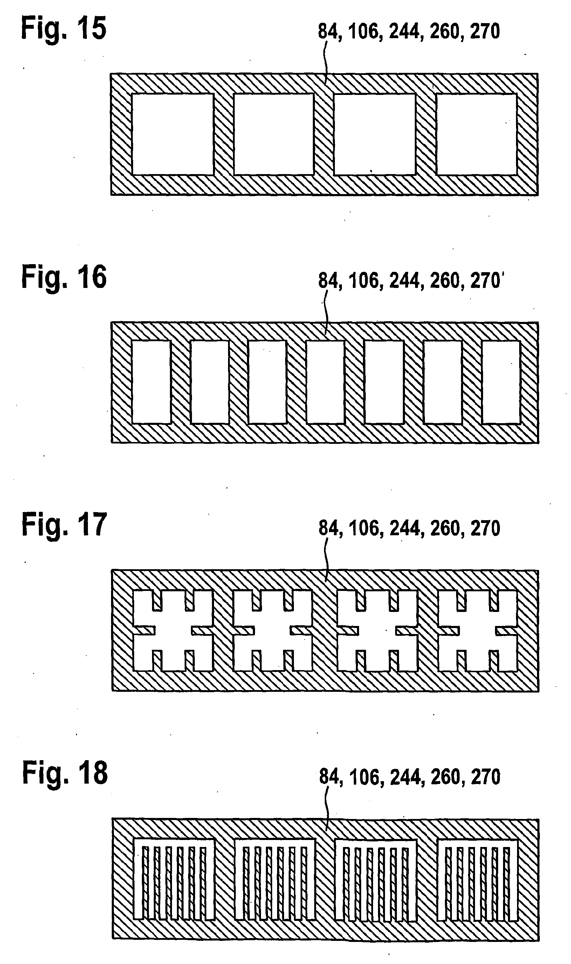

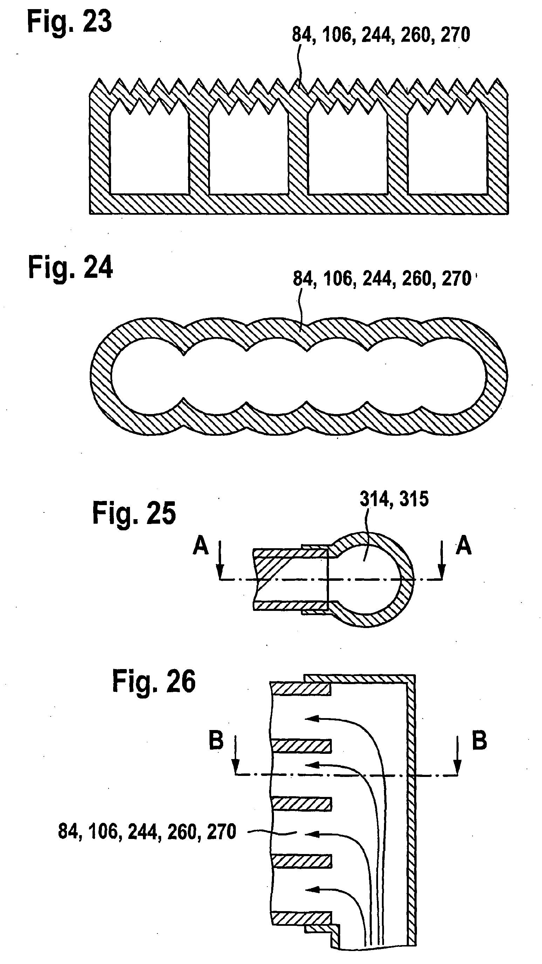

Die Figuren 15 bis 24 zeigen Querschnitte des ringförmigen Rohres 261, wobei der Querschnitt durch einen radialen Vektor des Ringes und seine axiale Ausdehnung aufgespannt wird. In den Figuren 18 bis 22 ist die Fläche des ringförmigen Rohres 261, die der Kupplungseinrichtung 6 zugewandt ist, jeweils am unteren Rand der Figuren. Bei der Figur 23 ist es der obere Rand. Diese Hervorhebung ist insofern wichtig, weil die Querschnittsgestaltung einen wesentlichen Einfluß auf den Wärmeübergang von dem zu kühlenden zum kühlenden Medium aufweist.

Be den Figuren 15 bis 19 sind innerhalb des Querschnittes Rippen angeordnet, die einen schnellen Wärmetransport von der Oberfläche des Querschnittes ins Innere gewährleisten, wobei dann kleinere Querschnitte für das kühlende Medium entstehen. Dadurch ist der Weg von dem wärmeren Material zum Zentrum des kühlenden Mediums kürzer. Dadurch erfolgt ein schnellerer Wärmetransport. Bei der Fig. 15 sind die kleineren Querschnitte quadratisch, während diese in der Figur 16 einen rechteckigen Querschnitt aufweisen. Die Figur 17 ist im Vergleich zur Figur 15 mit weiteren Rippen versehen, wodurch noch kürzere Wärmetransportwege zum kühlenden Medium entstehen.

Die Rippen - oder auch Stege - der Figuren 15 bis 19 weisen auch noch einen weiteren Vorteil auf: Durch die mechanische Kopplung der einen Wand mit der parallelen anderen Wand erhöht die Festigkeit des ringförmigen Rohres 261. Dadurch kann das kühlende Medium auch mit einem hohen Druck durch den Kühler 84, 106, 244, 260, 270 gefördert werrden, ohne dass der Kühler sich aufbläht. Dadurch können auch geringe Toleranzen zwischen der Kupplungseinrichtung 6 und dem Kühler realisiert werden.

In der Figur 18 sind zusätzlich zu den Stegen auch Lamellen angeordnet, die vorzugsweise mit der Wand verbunden sind, die dem zu kühlenden Medium zugewandt ist. Wie man hier erkennen kann, sind hier die Wärmetransportwege noch wesentlich kürzer, als in der Figur 17, wodurch ein sehr guter Wärmeübergang realisiert werden kann.

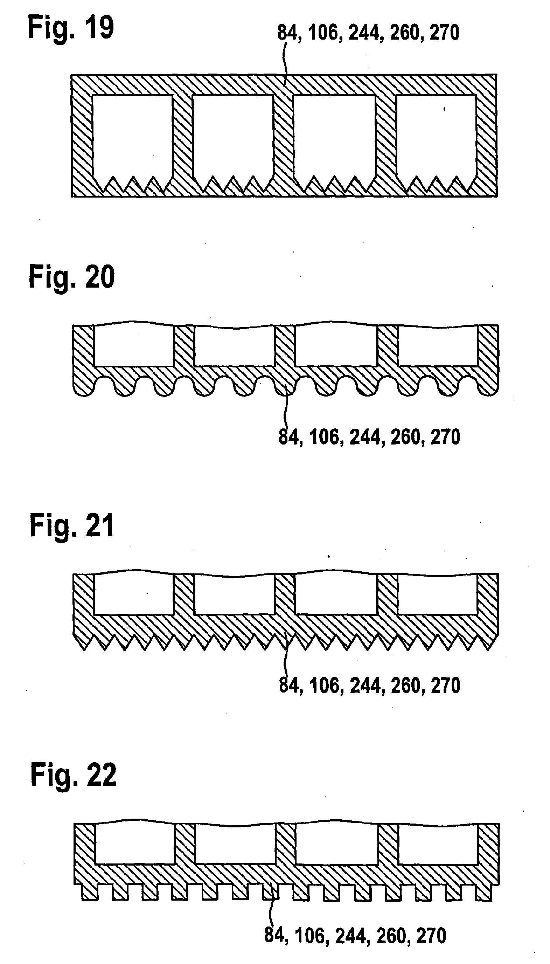

Eine andere Ausgestaltung der Querschnitte sieht vor, dass die direkte Grenzfläche von dem zu kühlenden zum kühlenden Medium mit einer Profilierung versehen ist. In der Figur 19 ist eine Vielzahl von Rippen mit dreieckigem Querschnitt vorgesehen, die im ringförmigen Rohr 261 angeordnet sind.

Bei den Figuren 20 bis 23 ist die Profilierung auf die Außenfläche der Wand verlegt worden, die der Kupplungseinrichtung 6 zugewandt ist. In der Figur 20 handelt es sich um ein wellenförmiges Profil. Bei der Figur 21 hingegen sind es wiederum eine Vielzahl von dreieckigen Querschnitten. In der Figur 22 ist die Profilierung mit rechteckigen Querschnitten gestaltet worden.

Eine Sonderform stellt die Figur 23 dar, weil hier sowohl im Inneren des ringförmigen Rohres 261, als auch an der Außenseite je ein Dreiecks-Profil angebracht wurde. Weil sich diese Profile "phasengleich" über die Oberfläche erstrecken, ist vorteilhafterweise eine gleichbleibend dünne Wandstärke erzielt worden.

Die bisher genannten Querschnitte werden mittels Strangpressen hergestellt. Bei der Figur 24 wird eine Profilierung gezeigt, die ohne innere Rippen bzw Stege auskommt. Dadurch kann dieser Querschnitt mittels Innenhochdruck-Umformen hergestellt werden. Um eine vergrößerte Oberfläche für den Wärmeübergang - und damit für den Wärmefluss - zu erhalten, ist der Querschnitt mit einer welligen Profilierung versehen. Dieses hat zusätzlich auch noch den Vorteil, dass dadurch eine zusätzliche Steifigkeit für den Querschnitt erzielt wird.

Mit den Figuren 25 und 26 wird eine Ausgestaltung für eine Ausgestaltung einer Einlass- oder Auslass-Bohrung 314, 315 und ihrer Verbindung mit dem einen Ende eines ringförmigen Rohres 261 gezeigt. Die Figur 25 stellt hierbei den Schnitt B - B in der Figur 26, und die Figur 26 den Schnitt A - A in der Figur 25 dar. Die Einlass- oder Auslass-Bohrung 314, 315 kann neben Metall auch aus Kunststoff gefertigt sein. Die Verbindung der Einlass- oder Auslass-Bohrung 314, 315 mit dem Ende eines ringförmigen Rohres 261 kann mittels Pressverband oder einer metallischen Verbindung, mittels Kleben, Vernieten oder auch Verschrauben erfolgen.

### Bezugszeichenliste

- 1.: Antriebsstrang
- 3.: Antriebseinheit
- 5.: Getriebe
- 6.: Doppelkupplung
- 8.: Schwingungsdämpfungseinrichtung
- 22.: Nabenteil
- 24.: Kupplungseingangsteil
- 26.: Außenlamellenträger
- 27.: erste Lamellen-Kupplungsanordnung
- 28.: Innenlamellenträger
- 30.: Nabenteil
- 36.: Außenlamellenträger
- 38.: zweite Lamellen-Kupplungsanordnung
- 40.: Innenlamellenträger
- 41.: Nabenteil
- 42.: zweite Getriebeeingangswelle
- 44.: Betätigungshebel
- 45.: Betätigungshebel
- 55.: Kupplungsdeckel
- 56.: Nassraum
- 57.: Aufnahmeraum
- 58.: Getriebegehäuseabschnitt
- 70.: Lagereinrichtung
- 81.: Ringraum
- 84.: Kühler
- 85.: Nassraumblech
- 88.: Kurbelwelle
- 91.: erste Lamellenkupplung
- 92.: zweite Lamellenkupplung
- 94.: äußerer Lamellenträger
- 95.: äußerer Lamellenträger
- 97.: innerer Lamellenträger
- 101.: erste Getriebeeingangswelle
- 102.: zweite Getriebeeingangswelle
- 104.: innerer Lamellenträger
- 106.: ringförmiger Kühler
- 108.: zu kühlendes Medium
- 121.: Kupplungsbelaglamelle
- 122.: Pfeil
- 124.: Außenverzahnung
- 125.: Innenverzahnung
- 128.: Lamellenträger
- 130.: Außenverzahnung
- 136.: Kühler
- 138.: Kühlerwandung
- 141.: Kühlölnut
- 142.: Kühlölnut
- 144.: Durchgangsloch
- 145.: Durchgangsloch
- 148.: zu kühlendes Medium
- 151.: radiale Geschwindigkeitskomponente
- 152.: Geschwindigkeitskomponente in Umfangsrichtung
- 153.: Geschwindigkeitskomponente
- 155.: Kühlmedium
- 158.: Pfeil
- 241.: Stahllamelle
- 242.: äußerer Lamellenträger
- 244.: Kühler
- 245.: Zufluss
- 246.: Abfluss
- 249.: Kühlerwandung
- 251.: Kugel
- 252.: Kugel
- 253.: Kugel
- 256.: gelochte Bleche
- 260.: Kühler
- 261.: Rohr
- 263.: Deckel
- 264.: Deckel
- 266.: Öffnung
- 270.: Kühler
- 271.: Vollmaterialring
- 276.: Einlass
- 277.: Auslass
- 281.: Kurbelwelle
- 284.: Lamellenkupplung
- 285.: Lamellenkupplung
- 286.: Getriebeeingangswelle
- 287.: Getriebeeingangswelle
- 288.: Kupplungsdeckel
- 289.: Kupplungsglocke
- 291.: U-förmiger Querschnitt
- 292.: Ringraum
- 293.: Kreisringscheibe
- 295.: Hohlraum
- 296.: Deckel
- 300.: Kupplungsglocke
- 302.: Kühler
- 304.: Wasserzuflussbohrung
- 305.: Anschlussstutzen
- 307.: Bohrung
- 308.: O-Ring
- 310.: Kühler
- 312.: Kupplungsglocke
- 314.: Einlassbohrung
- 315.: Auslassbohrung
- 316.: Einlassbohrung
- 317.: Auslassbohrung
- 318.: O-Ring
- 319.: O-Ring

## Patentansprüche

1. Drehmomentübertragungseinrichtung für einen Antriebsstrang (1) eines Kraftfahrzeugs zur Drehmomentübertragung zwischen einer Antriebseinheit (3), insbesondere einer Brennkraftmaschine, mit einer Abtriebswelle, insbesondere einer Kurbelwelle, und einem Getriebe (5) mit mindestens einer Getriebeeingangswelle (42), mit mindestens einer nasslaufenden Kupplungseinrichtung (6), die mehrere Kupplungselemente (27,38), insbesondere Lamellen, aufweist, die zumindest teilweise von einem zu kühlenden Medium umgeben sind, das in einem Kühler (84;260;292;295;302;310) abgekühlt wird, wobei der Kühler (84;260;292;295;302;310) eine Kühlerwandung aufweist, die radial außerhalb der Kupplungselemente (27,38) so angeordnet ist, dass das zu kühlende Medium im Betrieb der Drehmomentübertragungseinrichtung mit der Kühlerwandung in Kontakt kommt,
**dadurch gekennzeichnet, dass** der Kühler (84;260;292;295) in einem Ringraum (81) radial außerhalb der Kupplungselemente (27,38) angeordnet ist und
im Wesentlichen die Gestalt eines Rings aufweist.

2. Drehmomentübertragungseinrichtung nach Anspruch 1, **dadurch gekennzeichnet, dass** der Kühler (260) im Wesentlichen die Gestalt eines ringförmigen Rohres (261) aufweist.

3. Drehmomentübertragungseinrichtung nach einem der vorhergehenden Ansprüche, **dadurch gekennzeichnet, dass** der Kühler (292) in einen Kupplungsdeckel (288) der Kupplungseinrichtung integriert ist.

4. Drehmomentübertragungseinrichtung nach einem der Ansprüche 1 bis 2, **dadurch gekennzeichnet, dass** der Kühler (295) in eine Kupplungsglocke (289) der Kupplungseinrichtung integriert ist.

5. Drehmomentübertragungseinrichtung nach einem der vorhergehenden Ansprüche, **dadurch gekennzeichnet, dass** die Kupplungselemente (27,38) Lamellen (121) umfassen die an einem Lamellenträger (26,28,36,40; 128) angebracht sind, der Durchgangslöcher (144,145) aufweist, die einen Durchtritt des zu kühlenden Mediums in radialer Richtung ermöglichen.

6. Drehmomentübertragungseinrichtung nach Anspruch 5, **dadurch gekennzeichnet, dass** die Lamellen (121) Nuten (141, 142) für das zu kühlende Medium aufweisen, die jeweils im Bereich eines der Durchgangslöcher (144,145) münden.

7. Drehmomentübertragungseinrichtung nach einem der vorhergehenden Ansprüche, **dadurch gekennzeichnet, dass** der Kühler (302) axial (in Getrieberichtung oder in Motorrichtung) geführte Kühlmediumsanschlüsse (305) aufweist.

8. Drehmomentübertragungseinrichtung nach einem der vorhergehenden Ansprüche, **dadurch gekennzeichnet, dass** der Kühler (310) in radialer Richtung verlaufende Kühlmediumsanschlüsse (314,315) aufweist.

9. Drehmomentübertragungseinrichtung nach einem der Ansprüche 2 bis 8, **dadurch gekennzeichnet, dass** das ringförmige Rohr (261) mittels Strangpressen hergestellt wird.

10. Drehmomentübertraguhgseinrichtung nach einem der Ansprüche 2 bis 8, **dadurch gekennzeichnet, dass** das ringförmige Rohr (261) mittels Innenhochdruck-Umformen hergestellt wird.

11. Drehmomentübertragungseinrichtung nach einem der Ansprüche 2 bis 8, **dadurch gekennzeichnet, dass** das ringförmige Rohr (261) im Inneren eine Profilierung aufweist, die sich in Umfangsrichtung des Ringes erstreckt.

12. Drehmomentübertragungseinrichtung nach einem der Ansprüche 2 bis 11, **dadurch gekennzeichnet, dass** die Außenseite des ringförmige Rohres (261), die der Kupplungseinrichtung (6) zugewandt ist, eine Profilierung aufweist.

13. Drehmomentübertragungseinrichtung nach einem der Ansprüche 11 bis 12, **dadurch gekennzeichnet, dass** die Profilierung aus Rippen besteht, die die Innenwand des ringförmigen Rohres (261) mit der Außenwand verbinden.

14. Drehmomentübertragungseinrichtung nach einem der Ansprüche 11 bis 13, **dadurch gekennzeichnet, dass** im Inneren des ringförmigen Rohres (261) rechteckige Lamellen angeordnet sind.

15. Drehmomentübertragungseinrichtung nach Anspruch 14, **dadurch gekennzeichnet, dass** die Lamellen mit der Seite des ringförmigen Rohres (261) verbunden sind, die der Kupplungseinrichtung (6) zugewandt ist.

16. Drehmomentübertragungseinrichtung nach einem der Ansprüche 11 bis 15, **dadurch gekennzeichnet, dass** die Profilierung dreieckige Querschnitte aufweist.

17. Drehmomentübertragungseinrichtung nach einem der Ansprüche 11 bis 16, **dadurch gekennzeichnet, dass** die Profilierung rechteckige Querschnitte aufweist.

18. Drehmomentübertragungseinrichtung nach einem der Ansprüche 11 bis 17, **dadurch gekennzeichnet, dass** die Profilierung wellenförmige Querschnitte aufweist.

## Claims

1. Torque transmission device for a drivetrain (1) of a motor vehicle for transmitting torque between a drive unit (3), in particular an internal combustion engine with a drive output shaft, in particular a crankshaft, and a gearbox (5) with at least one gearbox input shaft (42), having at least one wet-running clutch device (6) which has a plurality of clutch elements (27, 38), in particular lamellae, which are at least partially surrounded by a medium to be cooled which is cooled in a cooler (84; 260; 292; 295; 302; 310), the cooler (84; 260; 292; 295; 302; 310) having a cooler wall which is arranged radially outside the clutch elements (27, 38) such that the medium to be cooled comes into contact with the cooler wall during the operation of the torque transmission device,
**characterized in that** the cooler (84; 260; 292; 295) is arranged in an annular chamber (81) radially outside the clutch elements (27, 38), and
is substantially in the form of a ring.

2. Torque transmission device according to Claim 1, **characterized in that** the cooler (260) is substantially in the form of an annular tube (261).

3. Torque transmission device according to one of the preceding claims, **characterized in that** the cooler (292) is integrated into a clutch cover (288) of the clutch device.

4. Torque transmission device according to either of Claims 1 and 2, **characterized in that** the cooler (295) is integrated into a clutch bell (289) of the clutch device.

5. Torque transmission device according to one of the preceding claims, **characterized in that** the clutch elements (27, 38) comprise lamellae (121) which are attached to a lamellae carrier (26, 28, 36, 40; 128) which has through holes (144, 145) which allow the medium to be cooled to pass through in the radial direction.

6. Torque transmission device according to Claim 5, **characterized in that** the lamellae (121) have grooves (141, 142) for the medium to be cooled, which grooves open out in each case in the region of one of the through holes (144, 145).

7. Torque transmission device according to one of the preceding claims, **characterized in that** the cooler (302) has cooling medium ports (305) extending axially (in the gearbox direction or in the engine direction).

8. Torque transmission device according to one of the preceding claims, **characterized in that** the cooler (310) has cooling medium ports (314, 315) which run in the radial direction.

9. Torque transmission device according to one of Claims 2 to 8, **characterized in that** the annular tube (261) is produced by extrusion.

10. Torque transmission device according to one of Claims 2 to 8, **characterized in that** the annular tube (261) is produced by hydroforming.

11. Torque transmission device according to one of Claims 2 to 8, **characterized in that** the annular tube (261) has, in the interior, a profiling extending in the circumferential direction of the ring.

12. Torque transmission device according to one of Claims 2 to 11, **characterized in that** the outer side, which faces towards the clutch device (6), of the annular tube (261) has a profiling.

13. Torque transmission device according to either of Claims 11 and 12, **characterized in that** the profiling is composed of ribs which connect the inner wall of the annular tube (261) to the outer wall.

14. Torque transmission device according to one of Claims 11 to 13, **characterized in that** rectangular lamellae are arranged in the interior of the annular tube (261).

15. Torque transmission device according to Claim 14, **characterized in that** the lamellae are connected to that side of the annular tube (261) which faces towards the clutch device (6).

16. Torque transmission device according to one of Claims 11 to 15, **characterized in that** the profiling has triangular cross sections.

17. Torque transmission device according to one of Claims 11 to 16, **characterized in that** the profiling has rectangular cross sections.

18. Torque transmission device according to one of Claims 11 to 17, **characterized in that** the profiling has wavelike cross sections.

## Revendications

1. Dispositif de transfert de couple pour une chaîne cinématique (1) d'un véhicule automobile pour le transfert de couple entre une unité d'entraînement (3), en particulier un moteur à combustion interne, comprenant un arbre de prise de force, en particulier un vilebrequin, et une transmission (5) avec au moins un arbre d'entrée de transmission (42), avec au moins un dispositif d'embrayage humide (6) qui présente plusieurs éléments d'embrayage (27, 38), en particulier des disques, qui sont entourés au moins en partie par un fluide à refroidir, qui est refroidi dans un refroidisseur (84;260;292;295;302;310), le refroidisseur (84;260;292;295;302;310) présentant une paroi de refroidisseur qui est disposée radialement en dehors des éléments d'embrayage (27, 38) de telle sorte que le fluide à refroidir vienne en contact avec la paroi de refroidisseur pendant le fonctionnement du dispositif de transfert de couple,
**caractérisé en ce que**
le refroidisseur (84;260;292;295) est disposé dans un espace annulaire (81) radialement à l'extérieur des éléments d'embrayage (27, 38) et présente essentiellement la forme d'un anneau.

2. Dispositif de transfert de couple selon la revendication 1, **caractérisé en ce que** le refroidisseur (260) présente essentiellement la forme d'un tube annulaire (261).

3. Dispositif de transfert de couple selon l'une quelconque des revendications précédentes, **caractérisé en ce que** le refroidisseur (292) est intégré dans un couvercle d'embrayage (288) du dispositif d'embrayage.

4. Dispositif de transfert de couple selon l'une quelconque des revendications 1 à 2, **caractérisé en ce que** le refroidisseur (295) est intégré dans une cloche d'embrayage (289) du dispositif d'embrayage.

5. Dispositif de transfert de couple selon l'une quelconque des revendications précédentes, **caractérisé en ce que** les éléments d'embrayage (27, 38) comprennent des disques (121) qui sont montés sur un support de disques (26,38,36,40;128) qui présente des trous traversants (144,145) qui permettent un passage du fluide à refroidir dans la direction radiale.

6. Dispositif de transfert de couple selon la revendication 5, **caractérisé en ce que** les disques (121) présentent des rainures (141, 142) pour le fluide à refroidir, qui débouchent à chaque fois dans la région de l'un des trous traversants (144, 145).

7. Dispositif de transfert de couple selon l'une quelconque des revendications précédentes, **caractérisé en ce que** le refroidisseur (302) présente des raccords de fluide de refroidissement (305) guidés axialement (dans la direction de la transmission ou dans la direction du moteur).

8. Dispositif de transfert de couple selon l'une quelconque des revendications précédentes, **caractérisé en ce que** le refroidisseur (310) présente des raccords de fluide de refroidissement (314,315) s'étendant dans la direction radiale.

9. Dispositif de transfert de couple selon l'une quelconque des revendications 2 à 8, **caractérisé en ce que** le tube annulaire (261) est fabriqué par filage.

10. Dispositif de transfert de couple selon l'une quelconque des revendications 2 à 8, **caractérisé en ce que** le tube annulaire (261) est fabriqué par formage interne sous haute pression.

11. Dispositif de transfert de couple selon l'une quelconque des revendications 2 à 8, **caractérisé en ce que** le tube annulaire (261) présente à l'intérieur un profilage qui s'étend dans la direction périphérique de l'anneau.

12. Dispositif de transfert de couple selon l'une quelconque des revendications 2 à 11, **caractérisé en ce que** le côté extérieur du tube annulaire (261), qui est tourné vers le dispositif d'embrayage (6), présente un profilage.

13. Dispositif de transfert de couple selon l'une quelconque des revendications 11 à 12, **caractérisé en ce que** le profilage se compose de nervures qui relient la paroi interne du tube annulaire (261) à la paroi externe.

14. Dispositif de transfert de couple selon l'une quelconque des revendications 11 à 13, **caractérisé en ce que** des disques rectangulaires sont disposés à l'intérieur du tube annulaire (261).

15. Dispositif de transfert de couple selon la revendication 14, **caractérisé en ce que** les disques sont connectés au côté du tube annulaire (261) qui est tourné vers le dispositif d'embrayage (6).

16. Dispositif de transfert de couple selon l'une quelconque des revendications 11 à 15, **caractérisé en ce que** le profilage présente des sections transversales triangulaires.

17. Dispositif de transfert de couple selon l'une quelconque des revendications 11 à 16, **caractérisé en ce que** le profilage présente des sections transversales rectangulaires.

18. Dispositif de transfert de couple selon l'une quelconque des revendications 11 à 17, **caractérisé en ce que** le profilage présente des sections transversales ondulées.
